# EUROPEAN PATENT SPECIFICATION

(11) **EP 3 117 170 B1**
(45) Date of publication and mention of the grant of the patent: **29.04.2020**
(21) Application number: 15717524.1
(22) Date of filing: 04.03.2015
(51) Int. Cl.: F28D 7/08, F28F 9/00, F28F 21/06, F28F 9/22

(54) **HEAT EXCHANGER FOR LOW TEMPERATURES**
WÄRMETAUSCHER FÜR NIEDRIGE TEMPERATUREN
ÉCHANGEUR DE CHALEUR POUR BASSES TEMPÉRATURES

(30) Priority: 04.03.2014 FI 20145206
(43) Date of publication of application: 18.01.2017
(73) Proprietor: Uponor Infra Oy, 01510 Vantaa (FI)
(72) Inventor: ROLIN, Jan, 01510 Vantaa (FI); JOKINEN, Matti, 01510 Vantaa (FI); SEPPÄLÄ, Sami, 01510 Vantaa (FI)
(74) Representative: Laine IP Oy
(86) International application number: PCT/FI2015/050136
(87) International publication number: WO 2015/132468

(56) References cited:
- DE-A1-102012 211 857
- GB-A- 2 413 841
- JP-A- 2002 333 290

## Description

The invention relates to a heat exchanger for recovering energy from energy sources that are at low temperatures. Such are, for example, watercourses, sewage reservoirs, and similar.

With the aid of heat pumps, thermal energy even at low temperatures, such as the heat of the ground or the heat of watercourses, can be exploited. Other large water masses too, such as sewage reservoirs, can be used as sources of energy. In this connection, the term low-temperature refers to temperatures in the order of +0.5 °C... +10 °C. The energy produced using heat pumps is usually used for heating or to produce domestic hot water.

Heat pumps can also be used for cooling, heat from the object to be cooled, for example an apartment block, being transferred to an object at a low temperature. In order to collect thermal energy, a collector circuit is placed in the ground or watercourse, and is connected either directly to the heat pump or is connected to it through a heat exchanger, in such a way that the heat-exchanging medium of the heat exchanger's secondary circuit circulates in the collector circuit and the heat pump's working heat-exchange medium in the primary circuit.

The present invention relates to a heat exchanger operating at low temperatures, one application of which is energy-collection and/or cooling systems based on heat pumps. In these applications, metal- tube heat exchangers, for instance, can be used. The most usual manufacturing materials for metal heat exchangers are acid-resistant (HST) or stainless (RST) steel or copper. In metal heat exchangers, the application limits the choice of the metal or metal alloy to be used and the tube diameter is often small, being less than 30 mm. Due to the small tube size and the labyrinthine construction, they are difficult to clean.

Sufficiently durable metallic materials are often also expensive. For these reasons, the life-cycle costs of metal heat exchangers become high.

Publication WO 201167457 discloses a type of heat exchanger, in which a larger diameter tube is formed from a hollow tube profile. In it, one heat-transfer medium is circulated in the inner hole of the tube profile while another medium can flow inside the larger tube formed from the profile. Alternatively, two coaxial-tube spirals are used, which are situated at a distance from each other, to that the heat-transfer medium can also circulate between the coaxial spirals. In this solution, one problem becomes the pressure resistance of the tube profile, which restricts its use in applications in which the pressure head is great. Chinese utility model CN2715090 discloses a heat exchanger, in which a spiral heat-exchanger tube is used.

Several different heat-exchanger constructions are known. Different construction have their own advantages and weaknesses, but a problem particularly in heat exchangers operating at low temperatures is a small heat-transfer surface area, the importance of which is emphasized when the temperature differences are small. The flow resistance of the secondary circuit increases excessively when the diameter of the heat exchanger increases, which significantly limits the length of the heat exchanger. The heat-transferring elements dirty easily and, when using several circuits, each circuit needs to be separately adjusted.

In tubular heat exchangers, there is usually a cylindrical tubular body, inside which a tube pack, consisting of several smaller tubes, is fitted longitudinally. Examples of such constructions are in publications US 3 426 841 and DE 10 2010 000421. Particularly in long heat exchangers the installation of the tube pack inside the round external tube is difficult and servicing and repairing the tubes is extremely laborious, or even impossible. At low temperatures, freezing often becomes a problem. Ice blocks the heat exchanger and prevents thermal transfer and can damage the structures.

If several materials are used in the construction, thermal expansions problems relate, for example, to steel-plastic constructions, due to the different coefficients of thermal expansion.

Document GB-A-241384 represents the closest prior art.

The invention is intended to create a more highly developed heat exchanger than previously for transferring energy between mediums at low temperatures.

One intention of one embodiment of the invention is to create a heat exchanger, which can be manufactured entirely from plastic materials.

The intention of one embodiment of the invention is to create a heat exchanger, which is easy to manufacture and maintain.

The intention of one embodiment is to create a heat exchanger, which is easy to keep clean.

Further, the intention of one embodiment of the invention is to create a heat exchanger, which has a good heat transfer capability.

The invention is based on an heat exchanger with the features of claim 1.

According to one embodiment of the invention, at least the body and the sheet tube profiles are manufactured from polyolefins, such as polyethylene or polypropylene.

According to one embodiment of the invention, the profile sheets are made from cavity profiles. The cavities of such cavity-profile sheets can be filled at least partly with a filler, for example, a thermally-insulating substance or a substance heavier than water.

According to one embodiment, a stiffener is fitted to at least one side of the body of the heat exchanger.

According to one embodiment, the body of the heat exchanger comprises a bottom sheet, which is in at least one direction wider than the casing formed by the body.

According to one embodiment, at least one tube pack of the thermal-transfer circuit comprises at least two parallel tube rows consisting of elongated tubes arranged on top of each other, which tubes on top of each other are connected alternately at their ends, in order to form one liquid channel.

According to one embodiment, the parallel tube rows are connected to two manifolds, through which the liquid circulation of the tube rows is arranged.

According to one embodiment, the manifolds are located at each end of the tube pack.

More specifically, the heat exchanger according to the invention is characterized by what is stated in the characterizing portion of the independent Claim.

Preferred embodiments of the invention are described in the dependent Claims.

Considerable advantages are gained with the aid of the applications and embodiments of the invention.

With the aid of the invention, a heat exchanger is created, which operates at low temperatures, in which the temperature of the medium coming to the primary circuit, i.e., for example, the circuit circulating from a heat pump, is Tin = -5 °C...-3 °C and the temperature of the medium coming to the secondary circuit is Tin = 2.0 °C...0.5 °C. When polymer materials, plastics, are used as the materials, good chemical resistance is achieved, and, by means of a suitable construction, good ring stiffness, so that the exchanger can be located, for example, underground. The chemical resistance permits energy transfer in demanding conditions, in which there are salts, acids, hydrocarbons, and alkalis. Thus, the exchanger can be placed, for instance, in seawater, or in various industrial process flows, liquors, and liquids. The exchanger is particularly suitable as the energy source of a heatpump system, both for heating and for cooling. Polyolefins are especially suitable for cold conditions, because ice does not easily form on structures made from them.

The possibility of rapid cleaning/washing has been taken into account in the construction. There is preferably an openable cover in the body casing of the heat exchanger, through which the internal part of the exchanger and the heat-transfer tubes can be cleaned and serviced. If necessary, the tube pack can be easily lifted out from inside the body for the replacement of individual tubes or rows of tubes. If the speed of repair is important, the tube pack can be simply lifted out and replaced with a new one. This feature is especially advantageous in the manufacture of the heat exchanger, because the tube pack used for heat transfer can simply be lifted ready-assembled into the body from above.

The properties of the body assembled from cavity-profile sheets can be varied by filling the cavities with suitable filler. For example, if a good thermal insulation capacity is required the cavities can be filled with thermal insulation. If, on the other hand, it is necessary to compensate for the buoyancy acting on the exchanger due to groundwater or open water, the cavities can be filled with a filler that is heavier than water, such as concrete. The external shape of the casing can be used to anchor the heat exchanger in the ground.

Known calculation models can be used as a point of departure in the design of the heat exchanger.

In the following, a preferred embodiment of the present technology is examined with the aid of examples and with reference to the accompanying drawings.
- Figure 1: shows a side cross-section of one heat exchanger according to the invention.
- Figure 2: shows the heat exchanger according to Figure 1 seen from the first end.
- Figure 3: shows a side view of the heat exchanger according to Figure 1.

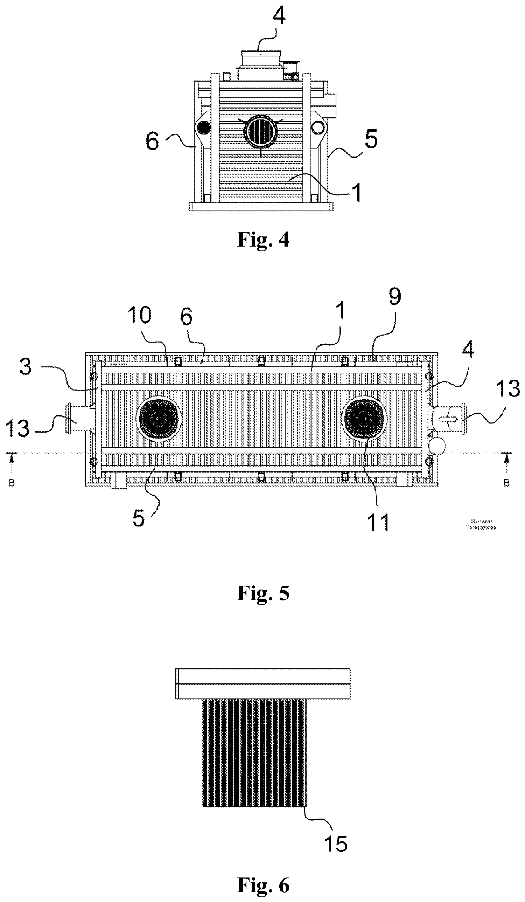

- Figure 4: shows the heat exchanger according to Figure 1 seen from the second end.
- Figure 5: shows a top view of the heat exchanger according to Figure 1.
- Figure 6: shows an end view of the heat-transfer tube pack of the embodiment of Figure 1.

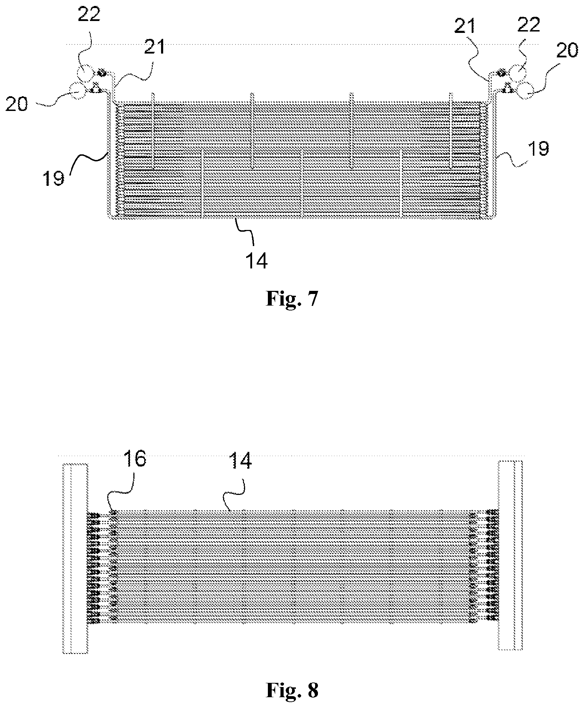

- Figure 7: shows a side view of the tube pack of Figure 6.
- Figure 8: shows a top view of the tube pack of Figure 6.
- Figure 9: shows a perspective view of the tube pack of Figure 6.
- Figure 10: shows a side view of the tube pack in greater detail.

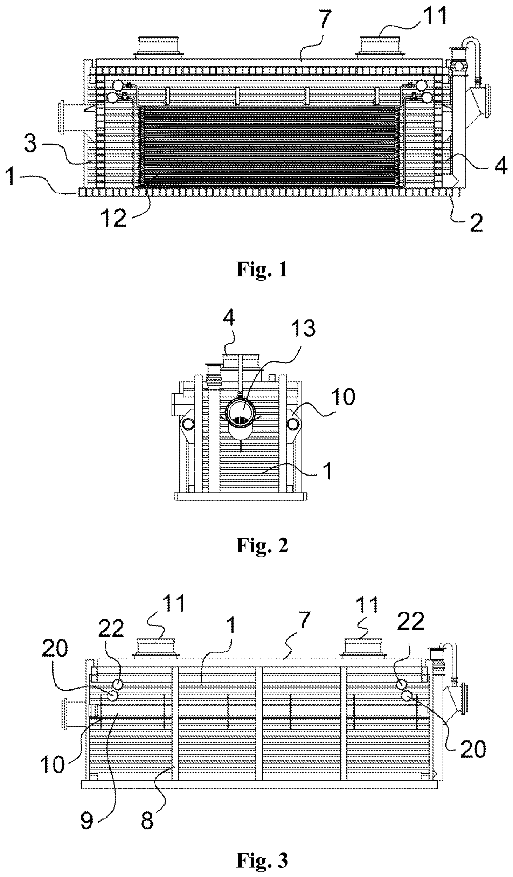

The heat exchanger according to the example of Figure 1 is constructed in a parallelepiped-shaped box-like casing, which is referred to hereinafter as the body 1. The body is assembled from rectangular cavity-profile sheet, from which the exchanger's bottom 2 ends 3, 4, side walls 5, 6, and cover 7 are formed. The bottom 2, side walls 5, 6, and cover 7 are parallel and form the long sides of the body and their direction defines the longitudinal axis of the body. A cavity-profile sheet consists of cavities, in this case rectangular, separated by partitions, and two opposing surfaces. The shape of the cavities can naturally vary, what is important is that by means of the cavity structure a light, but relatively rigid sheet is obtained. Thus, the material's stiffness and strength are sufficient for manufacturing the body of the heat exchanger. The body 1 is assembled on top of the sheet forming the bottom 2, in such a way that the end and side walls 3, 4, 5, 6 are attached vertically on top of the bottom 2 a short distance from the edges of the bottom 2. Thus, the edges of the bottom 2 form an anchor when the heat exchanger is placed inside the ground. The ends 3, 4 and side walls 5, 6 are attached, for example by welding, to the bottom 2 and to each other at the corners. The side walls 5, 6 are additionally supported vertically by vertical supports 8 running transversely to the walls, which are here rectangular in cross-section and set at right angles to the cavities of the walls. Here, the cavities of the side walls 5, 6 run horizontally. A tube 9, which is in addition attached to the wall by an attachment plate 10, acts as a longitudinal stiffener and is fitted through the vertical supports 8 at more or less the centre of the wall. The tube 9 can be used as an attachment point when moving the heat exchanger and also acts as vertical anchoring, for instance, against the possible buoyancy of groundwater when the heat exchanger is sunk into the ground.

A cover 7 is formed on the opposite side of the body 1 to the bottom 2. The cavities in the cover are transverse to the longitudinal direction of the body and stiffeners with a rectangular cross-section are fitted to the edges of the cover 7 on its long sides. In addition, there are maintenance/inspection openings 11 in the cover. One essential feature of the invention is precisely the cover 7 closing the upper part of the body. The opening closed by the cover 7 is now formed by a rectangle delimited by the side walls 5, 6 and the ends. Because the tube pack 12 of the heat exchanger must fit inside the space delimited by the walls 5, 6 and ends, it will fit through an opening delimited by them. The opening closed by the cover 7 must large enough and shaped in such a way that the tube pack 12, preferably with its attachments, will fit through it. The cover 7 closes this opening. When the heat exchanger is assembled, the tube pack is lifted, ready assembled, through the opening and into the body, into which it can now be easily fitted.

The cover 7 can be attached permanently in place after the assembling of the heat exchanger, for instance by welding, but preferably the cover is openable, so that the tube pack 12 can be more easily cleaned in place or lifted out of the box or container-like body 1 for maintenance or repair. Though there are maintenance openings 11 in the tube heat exchanger, as in this example, the tube pack 12 fills the space inside the body and it is mainly only inspections, but not really maintenance operations that can be made through the openings 11. Thus, it is preferable to attach the cover 7 to the rest of the body 1 in such a way that the cover can be opened. To attach the cover 7, for example, bolted joints, hinge and lock structures, or, for instance, locking wedges can be used. The joint between the cover 7 and the body 1 must naturally be sealed, either structurally or by using a seal.

The equipment of the body 1 further includes, for instance, water inlet and outlet connections 13, which are located at the ends 3, 4 of the body 1, as well as some other accessories that do not particularly relate to the invention.

A tube pack 12 consisting of heat-exchange pipework, which is formed of several parallel tube rows 15 assembled from several tubes 14 arranged on top of each other, is fitted inside the body 1. The tubes of the tube pack are parallel to the longitudinal axis of the body 1.

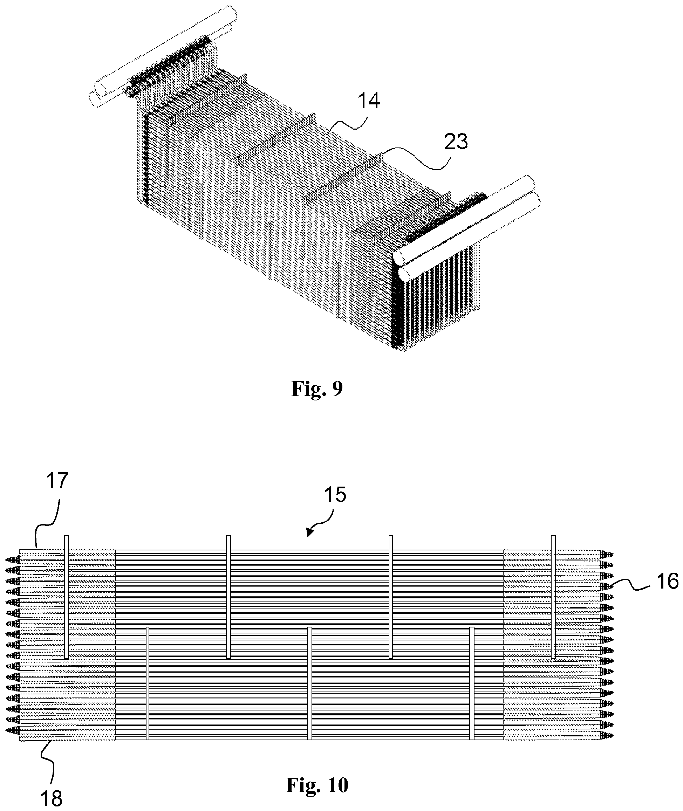

Figure 10 shows a side view of one such tube pack. Each of the tubes 14 on top of each other is connected at its ends to the end of an upper or corresponding lower tube by a butt or electrically welded reversing piece 16, in such a way that the other end of the upper tube 17 and lower tube 18 is open. In this way a long, meandering liquid channel is formed, in which the direction of travel of the liquid always changes at the ends of the tubes 14. The free open end of the lower tube 18 of each tube row 15 is connected by a connector tube 19 to the lower manifold 20 and the free open end of the upper tube 17 by a connector tube 21 to the upper manifold 22. The tube rows 15 are placed in parallel, in such a way that the open ends of the lower 18 and upper 17 tubes of one tube row 15 are on one side of the tube pack 12, then in the parallel tube rows all the ends are blocked by a reversing piece 16 and the open ends on the opposite side. Thus, every second tube row 15 connects to the manifolds 20, 22 at the first end of the tube pack 12 and every other tube row 15 parallel to them is, in turn, connected to the manifolds 20, 22 at the other end. The liquid circulating in the tube pack is fed from the manifolds to the tubes 14 and removed after circulating through the tube row 15 through the second manifold. Each of the manifolds 20, 22 runs through the side wall 5 or 6 of the body 1, thus forming inlet and outlet connections for the circulating liquid. The circulating liquid can be, for example, a generally used ethanol-based liquid.

Seven rectangular baffle plates 23 are located along the length of the tube pack 12, which at the same time support and stiffen the tube pack and, for their part, also increase the strength of the body 1. The baffle plates are intended to create mixing in the heat-transfer medium and thus to transfer heat as efficiently as possible between the heat-transfer medium flowing in the tubes 15 and the heat-transfer medium surrounding them. The baffle plates 23 also support the heat-transfer tube pack 12 on the inner surface of the body 1. If rectangular baffle plates 23 covering half of the tube pack are used, the distance between them should be at least 1/5 of the inner dimension of the body, however at least 50 mm. The maximum distance should not exceed the internal dimension of the body 1 and, when the baffle plates 23 act as support plates for the heat-transfer tubes, their mechanical stresses, such as strength and vibrations must be taken into account. More detailed instructions for the design of the heat exchanger in this connection are available from the handbooks and dimensioning guides of the sector.

The heat exchanger is dimensioned according to the application. It is preferable to use polyolefins, such as polyethylene and polypropylene, as the material of the body and other parts of the heat exchanger, on account of their good ice-formation-preventing properties.

The manufacturing material of the tubes 14 of the tube pack is preferably a material, which has essentially the same thermal expansion coefficient and chemical resistance as the corresponding properties of the body and other parts of the heat exchanger. The said same polyolefin materials are one advantageous example. The shape of the cross-section of the tubes is preferably a circle, due to ease of manufacture, but it can also be a simple equal-walled rectangle, or an oval, or there can be longitudinal or transverse finning or other protrusions in its internal or external surfaces or in both, in order to increase the heat-transfer surface. The shape of the tube profile can be chosen as desired, but in terms of manufacturing technique the manufacture of a standard-shape profile in the longitudinal direction is easiest. If the heat-transfer liquid easily dirties, the surface of the tube profile is preferably smooth and the internal surface of the profile can be surfaced or mixed with a substance that decreases dirtying. The internal surface of the tube profile is also preferably smooth, in order to minimize pressure losses. It can, of course, be envisaged that the tube profile is manufactured from a composite material of two or more layers, if the operating conditions demand this. In composite tubes, the layers of the layer structure can consist of the same or different materials. One example is a plastic-metal composite tube, and other example reinforced plastic tubes, in which are generally an inner and outer layer of a resin-rich material, and between them a reinforced layer to reinforce the strong structure.

Plastic materials generally have a good chemical resistance, so that with their aid the heat exchanger can be designed to operate in chemically demanding applications, in which, for example, salt content and pH set limits to the choice of materials.

The number of tubes 14 of the heat-transfer tube pack 12 and their placing inside the body 1 can vary. However, in order that the heat-transfer capacity of the heat exchanger will be sufficient, the tube rows 15 should be several, at least more than 5 and preferably more than 10 rows. The number of course varies according to the size of the heat exchanger. The basic rule is that the distance between the outer walls of the heat-transfer tubes should be at least 0.25 times the tube diameter.

The liquid of the secondary circuit of the invention is preferably water, which can be seawater, freshwater, sewage, or industrial process water. The liquid of the primary circuit can also be water, especially when the heat exchanger is used as a cooler. If the heat exchanger is used with a heat pump or some other device that circulates a refrigerant, then of course a refrigerant suitable for the purpose must be used. The refrigerant will then determine its suitability for the device being used.

Within the scope of the invention, it is also possible to envisage solutions differing from the embodiments described above. For example, it can be envisaged that the cross-section of the body 1 is rectangular, cylindrical, polygonal, or some other cross-section. A straight parallelogram is, however, often the cheapest to manufacture and will sufficiently withstand an external load.

The main components of the heat exchanger are preferably made from polyolefin plastics, but naturally other materials can be used as required, for example seals, screws, bolts, hinge pins, and similar made from steel, without deviating from the basic idea of the invention.

One advantageous implementation alternative for the body is the aforementioned cavity-profile sheet. If only weldable plastic is used as the manufacturing material, the heat exchanger can advantageously be manufactured by welding. If different materials are used and welding is not possible, other construction alternatives can be used, such as flange joints.

Instead of cavity-profile sheet, on at least one side compact profile sheets can be used. In one embodiment, the entire body 1 (i.e. casing) of the heat exchanger is manufactured from such profile sheets. Their wall thickness is generally about 10 - 200 mm, especially about 20 - 100 mm.

The plastic materials can be mixed with soot, graphite, talc, lithium, magnetite, barium sulphate, and metallic-derivative additives.

Heat exchangers according to the present technology are manufactured mainly for use on an industrial scale. Thus, the length of a single heat exchanger is generally about 500 - 10 000 mm, especially about 1000 - 7500 mm, most suitably about 1000 - 5000 mm; with a width of about 100 - 5000 mm, especially about 250 - 3000 mm, and a height of about 100 - 5000 mm, especially about 500 - 3000 mm.

The diameter of the heat-transfer tubes of heat exchangers is usually about 10 - 500 mm, especially about 25 - 300 mm, most suitably about 30 - 200 mm. There are generally 10 - 200 heat-transfer tubes to a heat exchanger, especially 10 - 100 to a heat exchanger.

### Reference-number list:

- 1: body
- 2: bottom
- 3, 4: end walls
- 5, 6: side walls
- 7: cover
- 8: vertical supports
- 9: tube
- 10: attachment plate
- 11: maintenance/inspection openings
- 12: tube pack
- 13: water inlet and outlet connections
- 14: tubes
- 15: parallel tube rows
- 16: reversing pieces
- 17: upper tube
- 18: lower tube
- 19,21: connector tube
- 20, 22: manifold
- 23: baffle plates

### Reference publications

WO 201167457
CN2715090
US 3 426841
DE 10 2010 000421.

## Claims

1. Heat exchanger for low temperatures, which heat exchanger comprises:
- a body (1) manufactured from planar profile sheet,forming the exchanger's bottom (2), ends (3, 4), side walls (5, 6) and a cover (7),
- a tube pack (12) fitted inside the body (1) for circulating a first heat-exchange medium in the heat exchanger, connections (20, 22) to lead the heat-transfer medium to the tube pack (12) and from the tube pack,
- an opening arranged in at least one long side (7) of the body (1), which is dimensioned to be large enough that the tube pack (12) forming at least one circuit of the heat exchanger can be fitted inside the body (1) through the opening,
- a cover (7) arranged to close the opening, and
- a further connection (13) for leading the heat-transfer medium inside the body,
wherein
- at least the body is manufactured from plastic material, and
- the heat exchanger comprises a further connection (13) for leading the heat-transfer medium from the body,
**characterized in that** the the body is assembled from rectangular cavity-profile sheet consisting of cavities separated by partitions and two opposing surfaces.,

2. Heat exchanger according to Claim 1, **characterized in that** the tube pack is formed of tube profiles, which are made from plastic material.

3. Heat exchanger according to Claim 1 or 2, **characterized in that** the body (1) and tube profiles are made from polyolefins, such as polyethylene or polypropylene or a combination of these.

4. Heat exchanger according to Claim 1 or 2, **characterized in that** the cover (7) is openable.

5. Heat exchanger according to any of the above Claims, **characterized in that** the body (1) of the heat exchanger is made from planar cavity-profile sheet.

6. Heat exchanger according to Claim 5, **characterized in that** the cavities of the cavity-profile sheet are filled at least partly with a filler, for example, a thermally insulating substance or a substance that is heavier than water.

7. Heat exchanger according to any of the above Claims, **characterized in that** there are protrusions on the surface of the profiles of the tubes (14) of at least one tube pack (12).

8. Heat exchanger according to any of the above Claims, **characterized** the inner surface of the tubes (14) of the tube pack (12) is smooth.

9. Heat exchanger according to any of the above Claims, **characterized in that** at least the inner surface of the tubes (14) of the tube pack (12) is surfaced or mixed with a substance that prevents dirtying.

10. Heat exchanger according to any of the above Claims, **characterized by** a longitudinal stiffener (9) fitted to at least one long side of the body (1).

11. Heat exchanger according to any of the above Claims, **characterized in that** at least one tube pack (12) of the heat exchanger comprises parallel tube rows (15) consisting of at least two elongated tubes (14) arranged on top of each other, in which the tubes (14, 17, 18) on top of each other are connected alternately at their ends in order to form a liquid channel.

12. Heat exchanger according to Claim 11, **characterized in that** the parallel tube rows (15) are connected to two manifolds (20, 22), through which the liquid circulation of the tube rows (15) is arranged.

13. Heat exchanger according to Claim 11 or 12, **characterized in that** manifolds (20, 22) are situated at both ends of the tube pack (15) and the parallel tube rows (15) are connected alternately to the manifolds (20, 22) at different ends.

14. Heat exchanger according to any of the above Claims, **characterized in that** the body (1) comprises a bottom plate (2), which is wider in at least one direction than the casing formed on top of the bottom plate (2) of the body (1).

15. Heat exchanger according to any of the above Claims, **characterized in that** the heat exchanger is manufactured from a weldable polymer material.

## Patentansprüche

1. Wärmetauscher für niedrige Temperaturen, wobei der Wärmetauscher umfasst:
- einen Körper (1), der aus planem Profilblech hergestellt ist, das den Boden (2), die Enden (3, 4), die Seitenwände (5, 6) und eine Abdeckung (7) des Wärmetauschers bildet,
- ein Rohrpaket (12), das innerhalb des Körpers (1) eingepasst ist, zum Zirkulieren eines ersten Wärmeübertragungsmediums in dem Wärmetauscher, Verbindungen (20, 22) zum Leiten des Wärmeträgermediums zu dem Rohrpaket (12) und von dem Rohrpaket,
- eine Öffnung, die in mindestens einer langen Seite (7) des Körpers (1) angeordnet ist, die bemessen ist, um groß genug zu sein, damit das Rohrpaket (12), das mindestens einen Kreislauf des Wärmetauschers bildet, innerhalb des Körpers (1) durch die Öffnung eingepasst werden kann,
- eine Abdeckung (7), die angeordnet ist, um die Öffnung zu schließen, und
- eine weitere Verbindung (13) zum Leiten des Wärmeträgermediums innerhalb des Körpers,
wobei
- mindestens der Körper aus Kunststoffmaterial hergestellt ist, und
- der Wärmetauscher eine weitere Verbindung (13) zum Leiten des Wärmeträgermedium von dem Körper umfasst,
**dadurch gekennzeichnet, dass** der Körper aus rechteckigem Hohlraum-Profilblech zusammengesetzt ist, das aus durch Trennwände getrennten Hohlräumen und zwei gegenüberliegenden Oberflächen besteht.

2. Wärmetauscher nach Anspruch 1, **dadurch gekennzeichnet, dass** das Rohrpaket aus Rohrprofilen gebildet ist, die aus Kunststoffmaterial gefertigt sind.

3. Wärmetauscher nach Anspruch 1 oder 2, **dadurch gekennzeichnet, dass** der Körper (1) und die Rohrprofile aus Polyolefinen, wie Polyethylen oder Polypropylen oder einer Kombination daraus gefertigt sind.

4. Wärmetauscher nach Anspruch 1 oder 2, **dadurch gekennzeichnet, dass** die Abdeckung (7) geöffnet werden kann.

5. Wärmetauscher nach einem der vorstehenden Ansprüche, **dadurch gekennzeichnet, dass** der Körper (1) des Wärmetauschers aus planem Hohlraum-Profilblech gefertigt ist.

6. Wärmetauscher nach Anspruch 5, **dadurch gekennzeichnet, dass** die Hohlräume des Hohlraum-Profilblechs mindestens teilweise mit einem Füllstoff gefüllt sind, zum Beispiel mit einer wärmeisolierenden Substanz oder einer Substanz, die schwerer ist als Wasser.

7. Wärmetauscher nach einem der vorstehenden Ansprüche, **dadurch gekennzeichnet, dass** auf der Oberfläche der Profile der Rohre (14) von mindestens einem Rohrpaket (12) Vorsprünge vorhanden sind.

8. Wärmetauscher nach einem der vorstehenden Ansprüche, **dadurch gekennzeichnet, dass** die innere Oberfläche der Rohre (14) des Rohrpakets (12) glatt ist.

9. Wärmetauscher nach einem der vorstehenden Ansprüche, **dadurch gekennzeichnet, dass** mindestens die innere Oberfläche der Rohre (14) des Rohrpakets (12) mit einer Substanz beschichtet oder vermischt ist, die Verschmutzung verhindert.

10. Wärmetauscher nach einem der vorstehenden Ansprüche, **gekennzeichnet durch** ein Längsversteifungselement (9), das mindestens in eine lange Seite des Körpers (1) eingepasst ist.

11. Wärmetauscher nach einem der vorstehenden Ansprüche, **dadurch gekennzeichnet, dass** mindestens ein Rohrpaket (12) des Wärmetauschers parallele Rohrreihen (15) umfasst, die aus mindestens zwei länglichen, aufeinander angeordneten Rohren (14) bestehen, wobei die aufeinander angeordneten Rohre (14, 17, 18) abwechselnd an ihrem Ende verbunden sind, um einen Flüssigkeitskanal zu bilden.

12. Wärmetauscher nach Anspruch 11, **dadurch gekennzeichnet, dass** die parallelen Rohrreihen (15) mit zwei Verteilerrohren (20, 22) verbunden sind, durch die Flüssigkeitszirkulation der Rohrreihen (15) angeordnet ist.

13. Wärmetauscher nach Anspruch 11 oder 12, **dadurch gekennzeichnet, dass** Verteilerrohre (20, 22) an beiden Enden des Rohrpakets (15) positioniert sind, und die parallelen Rohrreihen (15) abwechselnd mit den Verteilerrohren (20, 22) an unterschiedlichen Enden verbunden sind.

14. Wärmetauscher nach einem der vorstehenden Ansprüche, **dadurch gekennzeichnet, dass** der Körper (1) eine Bodenplatte (2) umfasst, die in mindestens eine Richtung breiter ist als das oben auf der Bodenplatte (2) des Körpers (1) gebildete Gehäuse.

15. Wärmetauscher nach einem der vorstehenden Ansprüche, **dadurch gekennzeichnet, dass** der Wärmetauscher aus einem schweißbaren Polymermaterial hergestellt ist.

## Revendications

1. Échangeur de chaleur pour basses températures, lequel échangeur de chaleur comprend :
- un corps (1) fabriqué à partir d'une feuille profilée plate, formant la partie inférieure (2), les extrémités (3, 4), les parois latérales (5, 6) et un couvercle (7) de l'échangeur,
- un ensemble de tubes (12) installé à l'intérieur du corps (1) pour faire circuler un premier milieu d'échange de chaleur dans l'échangeur de chaleur, des connexions (20, 22) pour conduire le milieu de transfert de chaleur vers l'ensemble de tubes (12) et à partir de l'ensemble de tubes,
- une ouverture agencée dans au moins un côté long (7) du corps (1), qui est dimensionnée pour être suffisamment grande pour que l'ensemble de tubes (12) formant au moins un circuit de l'échangeur de chaleur puisse être installé à l'intérieur du corps (1) à travers l'ouverture,
- un couvercle (7) agencé pour fermer l'ouverture, et
- une connexion (13) supplémentaire pour conduire le milieu de transfert de chaleur à l'intérieur du corps,
dans lequel
- au moins le corps est fabriqué à partir d'un matériau en plastique, et
- l'échangeur de chaleur comprend une connexion (13) supplémentaire pour conduire le milieu de transfert de chaleur à partir du corps,
**caractérisé en ce que** le corps est assemblé à partir d'une feuille profilée rectangulaire à cavités consistant en cavités séparées par des cloisons et deux surfaces opposées.

2. Échangeur de chaleur selon la revendication 1, **caractérisé en ce que** l'ensemble de tubes est formé de tubes profilés, qui sont faits de matériau en plastique.

3. Échangeur de chaleur selon la revendication 1 ou 2, **caractérisé en ce que** le corps (1) et les tubes profilés sont faits de polyoléfines, telles qu'un polyéthylène ou un polypropylène ou une combinaison de ceux-ci.

4. Échangeur de chaleur selon la revendication 1 ou 2, **caractérisé en ce que** le couvercle (7) peut être ouvert.

5. Échangeur de chaleur selon l'une quelconque des revendications précédentes, **caractérisé en ce que** le corps (1) de l'échangeur de chaleur est fait d'une feuille profilée plate à cavités.

6. Échangeur de chaleur selon la revendication 5, **caractérisé en ce que** les cavités de la feuille profilée à cavités sont remplies au moins partiellement d'une charge, par exemple, d'une substance d'isolation thermique ou d'une substance qui est plus lourde que l'eau.

7. Échangeur de chaleur selon l'une quelconque des revendications précédentes, **caractérisé en ce qu'**il existe des saillies sur la surface des profils des tubes (14) d'au moins un ensemble de tubes (12).

8. Échangeur de chaleur selon l'une quelconque des revendications précédentes, **caractérisé en ce que** la surface interne des tubes (14) de l'ensemble de tubes (12) est lisse.

9. Échangeur de chaleur selon l'une quelconque des revendications précédentes, **caractérisé en ce qu'**au moins la surface interne des tubes (14) de l'ensemble de tubes (12) est recouverte ou mélangée avec une substance qui empêche l'encrassement.

10. Échangeur de chaleur selon l'une quelconque des revendications précédentes, **caractérisé par** un raidisseur longitudinal (9) installé sur au moins un côté long du corps (1).

11. Échangeur de chaleur selon l'une quelconque des revendications précédentes, **caractérisé en ce qu'**au moins un ensemble de tubes (12) de l'échangeur de chaleur comprend des rangées de tubes parallèles (15) consistant en au moins deux tubes allongés (14) agencés les uns sur les autres, dans lesquelles les tubes (14, 17, 18) les uns sur les autres sont connectés de manière alternée au niveau de leurs extrémités afin de former un canal de liquide.

12. Échangeur de chaleur selon la revendication 11, **caractérisé en ce que** les rangées de tubes parallèles (15) sont connectées à deux collecteurs (20, 22), à travers lesquels la circulation de liquide des rangées de tubes (15) est agencée.

13. Échangeur de chaleur selon la revendication 11 ou 12, **caractérisé en ce que** les collecteurs (20, 22) sont situés au niveau des deux extrémités de l'ensemble de tubes (15) et les rangées de tubes parallèles (15) sont connectées de manière alternée aux collecteurs (20, 22) au niveau des différentes extrémités.

14. Échangeur de chaleur selon l'une quelconque des revendications précédentes, **caractérisé en ce que** le corps (1) comprend une plaque inférieure (2), qui est plus large dans au moins une direction que le boîtier formé en haut de la plaque inférieure (2) du corps (1).

15. Échangeur de chaleur selon l'une quelconque des revendications précédentes, **caractérisé en ce que** l'échangeur de chaleur est fabriqué à partir d'un matériau polymère pouvant être soudé.
